# EUROPÄISCHE PATENTSCHRIFT

(11) **EP 3 260 713 B1**
(45) Veröffentlichungstag und Bekanntmachung des Hinweises auf die Patenterteilung: **10.04.2019**
(21) Anmeldenummer: 16305743.3
(22) Anmeldetag: 20.06.2016
(51) Int. Cl.: F16B 37/08

(54) **SCHNELLBEFESTIGUNGSVORRICHTUNG DES TYPS SCHRAUBE-MUTTER, INSBESONDERE FÜR DIE BEFESTIGUNG VON EINEM RAHMEN AN EINER UNTERFLUR-VERSORGUNGSEINHEIT**
QUICK MOUNTING SYSTEM OF THE TYPE SCREW NUT, IN PARTICULAR FOR FIXING A FRAME ON AN UNDERFLOOR SUPPLYING UNIT
DISPOSITIF DE FIXATION RAPIDE DU TYPE VIS-ECROU, EN PARTICULIER POUR LA FIXATION D'UN CADRE SUR UNE UNITE D'ALIMENTATION SOUTERRAINE

(43) Veröffentlichungstag der Anmeldung: 27.12.2017
(73) Patentinhaber: Tehalit GmbH, 67716 Heltersberg (DE)
(72) Erfinder: LETTERMANN, Gert, 67688 RODENBACH (DE)
(74) Vertreter: Nuss, Laurent

(56) Entgegenhaltungen:
- EP-A2- 2 351 890
- WO-A1-2009/069689
- DE-A1- 2 061 408
- US-A- 5 782 597

## Beschreibung

Die vorliegende Erfindung betrifft eine Schnellbefestigungsvorrichtung des Typs Schraube-Mutter, insbesondere für die Befestigung von einem Rahmen an einer Unterflur-Versorgungseinheit.

Die DE 2 061 408 A zeigt beispielsweise eine Schnellmontagemutter mit mehreren Segmenten, welche durch geeignete Distanzfedern parallelgeführt werden.

Bei Befestigungsvorrichtungen des Typs Schraube-Mutter werden in der Regel zwei Teile in bekannter Weise fest miteinander verbunden. Manchmal besteht zwischen zwei Teilen, die zu verbinden sind eine gewisse Distanz, die respektiert und somit eingestellt werden muss. Man kann dazu Zwischenteile, z. B. die Länge der Schraube benutzen, was dazu führt, dass mehrere Schraubentypen verschiedener Längen vorhanden sein müssen und bei der Montage die genaue gewünschte Distanz oder der benötigte Abstand fein eingestellt werden muss. Aufwendige Justierung und Schraubvorgänge sind dann notwendig, die die Montage erschweren und entsprechend verlängern bzw. teurer machen.

Es ist die Aufgabe der vorliegenden Erfindung eine Schnellbefestigungsvorrichtung des Typs Schraube-Mutter anzubieten, die es erlaubt zwei Teile schnell, einfach und fest miteinander zu verschrauben und es gleichzeitig zumindest bei der ersten Verbindung (während der Montage) ermöglicht eine variable, vorgegebene Distanz zwischen beiden Teilen einfach und ohne lange oder komplizierte Schraubvorgänge einzustellen. Es genügt hier einfach ein Teil mit der Schraube und das andere Teil mit dem als Mutter fungierenden Element der Schnellbefestigungsvorrichtung zu solidarisieren. Das Zusammenwirken der Schraube mit diesem Element garantiert dann die vorteilhafte Verbindung, die bei der Montage nur ein einfaches Reinschieben, bei der Demontage aber ein klassisches Herausschrauben erfordert. Dadurch ist die Montage einfach und rapide und erzeugt eine feste Verbindung, wobei die Schraube nicht mehr einfach herausgezogen werden kann sondern herausgeschraubt werden muss.

Diese Aufgabe wird gelöst durch eine Schnellbefestigungsvorrichtung des Typs Schraube-Mutter mit den Merkmalen des Anspruchs 1.

Weitere vorteilhafte Merkmale und Ausgestaltungen werden in den Unteransprüchen angegeben.

Somit betrifft die Erfindung hauptsächlich eine Schnellbefestigungsvorrichtung des Typs Schraube-Mutter, insbesondere für die Befestigung von einem Rahmen an einer Unterflur-Versorgungseinheit, dadurch gekennzeichnet, dass die Vorrichtung aus einem Klemmmutterträger und einer Klemmmutter besteht, wobei die Klemmmutter drei separate Gewindesegmente aufweist, die zusammen mit dem Gewinde der zu befestigen Schraube zusammenwirken, wobei die drei separaten Gewindesegmente an drei separaten Modulen ausgebildet sind welche miteinander durch jeweils zwei elastisch ausgebildete Stegepaare verbunden sind, wobei sich zwei direkt benachbarte Module jeweils gegenüberstehen, so dass die Gewindesegmente den Schraubenschaft der Schraube umringen und wobei die drei separate Module durch drei entsprechende Kammern, bzw. die zwei Stegepaare durch jeweils zwei Rillenpaare aufgenommen werden, wobei die besagten Kammern und Rillenpaare jeweils in der inneren Wandung des Klemmmutterträgers ausgebildet sind und wobei zwischen den drei Modulen und den drei entsprechenden Kammern sowie zwischen dem Gewinde und den drei Gewindesegmente genügend Spiel vorgesehen ist damit bei einem Hereindrücken ohne Drehen der Schraube in die Vorrichtung die zwei Stegepaare sich aufeinander hinzu verbiegen um das Hereindrücken ohne eine Beschädigung der verschiedenen Gewindeabschnitte an der Schraube und den Gewindesegmenten zu ermöglichen.

Dank der vorliegenden Erfindung können also verschiedene Teile wie z. B. Rahmen, Abdeckblenden oder Abdeckblendenteile, usw. einfach und zuverlässig (solide) mit der Geräteeinbaudose, dem Kabelkanal, usw. in einem einfachen Schritt ohne kompliziertes Schrauben mit einer exakten Distanz zueinander verbunden werden und bei Bedarf wieder durch einfaches Abschrauben getrennt werden, z. B. bei einem Austausch, einer Reparatur, einer Änderung, Ergänzung, usw.

Obwohl die erfindungsgemäße Schnellbefestigungsvorrichtung in der folgenden Beschreibung als Beispiel auf einen konkreten Fall im Bereich der Elektroinstallation im Bauwesen angewandt wurde, ist Letztere nicht auf eine solche spezifische Anwendung beschränkt sondern betrifft vielmehr alle Fälle in denen sich die obengenannte generelle Aufgabe stellt bzw. alle Fälle in denen eine alternative Schnellbefestigungsvorrichtung dieses Typs benutzt werden kann, insbesondere wenn diese Benutzung die obengenannte Vorteile teilweise oder ganz ausspielen kann.

Anhand der Zeichnung soll die Erfindung in Form von schematischen Ausführungsbeispielen näher erläutert werden. Es zeigen jeweils:
Fig. 1a eine perspektivische Ansicht eines Beispiels einer erfindungsgemäßen Verbindung zwischen einer Versorgungseinheit als Geräteeinbaudose mit dem dazu passenden Rahmen;
Fig. 1b die zwei verbundenen Teile der Fig. 1a im Umfeld eines Fußbodens der aus einem Fußbodenaufbau mit variabler Höhe besteht und auf eine Betondecke angebracht wird;
Fig. 2 eine vergrößerte perspektivische Ansicht eines Ausschnitts der Fig. 1b im Bereich der Verbindung (Schnitt in der Mitte entlang der Längsachse) der zwei Teile dank der erfindungsgemäßen Schnellverbindungsvorrichtung;
Fig. 3 eine vergrößerte perspektivische Ansicht eines Beispiels einer Klemmmutter (wie in Fig. 2) der erfindungsgemäßen Schnellverbindungsvorrichtung;
Fig. 4 eine vergrößerte Ansicht des Schnitts eines Beispiels eines Klemmmutterträgers (wie in der Fig. 2) der erfindungsgemäßen Schnellverbindungsvorrichtung; und
Fig. 5 eine vergrößerte Ansicht des Schnitts eines Beispiels der erfindungsgemäßen Schnellverbindungsvorrichtung zur Veranschaulichung des Funktionsprinzips.

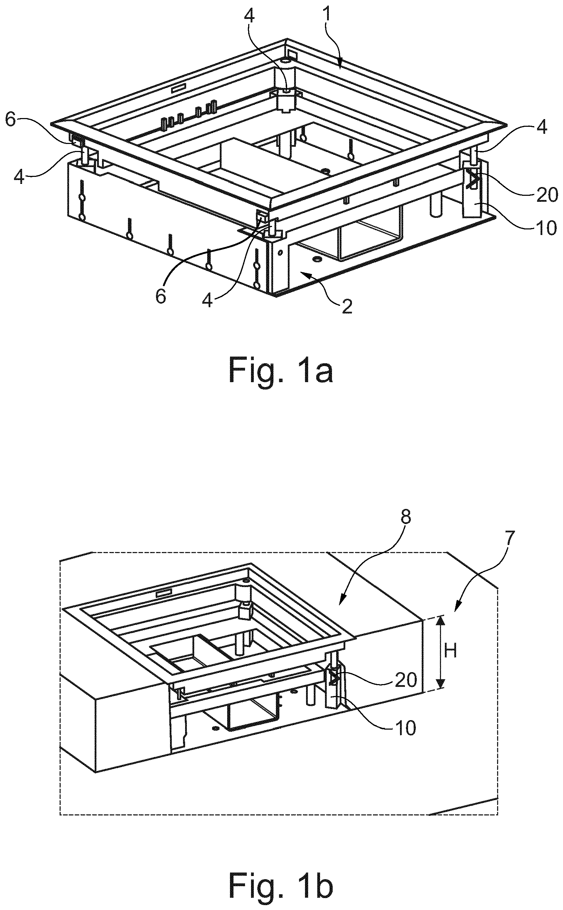

Figur 1a zeigt schematisch und in vereinfachter Weise in einem nicht begrenzenden Beispiel die perspektivische Ansicht einer erfindungsgemäßen Verbindung zwischen einer Unterflur-Versorgungseinheit 2 (im Nachhinein "Versorgungseinheit") als Geräteeinbaudose mit dem dazu passenden Rahmen 1. Wie auf Fig. 1b veranschaulicht, werden diese zwei (z. B. metallische) Teile bei der Installation in den Fußboden gelassen, z. B. indem auf eine Betondecke 7 ein Fußbodenaufbau 8 gegossen oder angebracht wird dessen Höhe H meistens vorgegeben und somit zu respektieren ist. Diese Höhe H stellt in der Praxis ein Verstellbereich von ca. 80 bis 110 mm dar, der je nach Gegebenheit (Trittschall-/Isolierung/Heizung...) variieren kann, so dass die Distanz zwischen dem oberen Rand der Versorgungseinheit 2 und dem Rahmen 1, dessen flacher Rand genau auf den Fußboden auflegen muss auch variiert. Bei einer konventionellen Verbindung in der der Rahmen 1 auf die Versorgungseinheit 2 aufgeschraubt wird, sind somit je nach Situation verschiedene Schraubenlängen notwendig. Auch die Montage kann schnell aufwendig und langwierig werden wenn die Anzahl an zu fixierenden Schrauben auf der Baustelle wächst und jede einzelne Schraube justiert werden muss um eine ordnungsgemäße Befestigung, die weder zu lose noch zu fest ist, zu gewährleisten.

Durch die Schnellbefestigungsvorrichtung der vorliegenden Erfindung wird z. B. der besagte Rahmen 1 bis auf den Fußbodenaufbau gedrückt und erhält sofort durch die (hier vier) verrastenden Schrauben 4 einen festen, exakt platzierten und sicheren Sitz. Ein langwieriges Schrauben ist bei der Montage nicht mehr notwendig. Bei Bedarf kann der Rahmen 1 wieder entfernt werden, indem er einfach abgeschraubt wird. Dies geschieht jedoch relativ selten und kann leichter automatisiert werden, da bei einer solchen Operation kein Justieren bzw. größere Sorgfalt oder Rücksicht auf die Teile erforderlich ist.

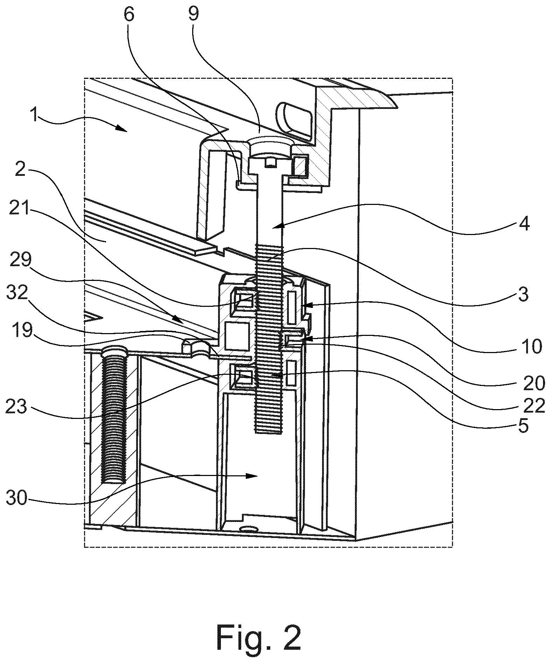

Die genauere Ausgestaltung und Funktionsweise der erfindungsgemäßen Schnellbefestigungsvorrichtung und dessen Bestandteile wird nun, unter Bezugnahmen der Figuren 2 bis 5, näher beschrieben und erklärt.

Fig. 2 zeigt eine vergrößerte perspektivische Ansicht eines Ausschnitts der Fig. 1b im Bereich der Verbindung an einer der vier Ecken der Versorgungseinheit 2 sowie des Rahmens 1.

Die erfindungsgemäße Schnellbefestigungsvorrichtung verbindet beide Teile dank der Schraube 4, die einerseits am Rahmen 1 durch ein Verbindungsmittel 6 und andererseits in der Klemmmutter 20 durch ihr Gewinde 3 befestigt ist. Diese Klemmmutter 20 ist wiederum im Klemmmutterträger 10 angebracht, welcher durch ein zweites Verbindungsmittel 29 mit der Versorgungseinheit 2 fest verbunden ist.

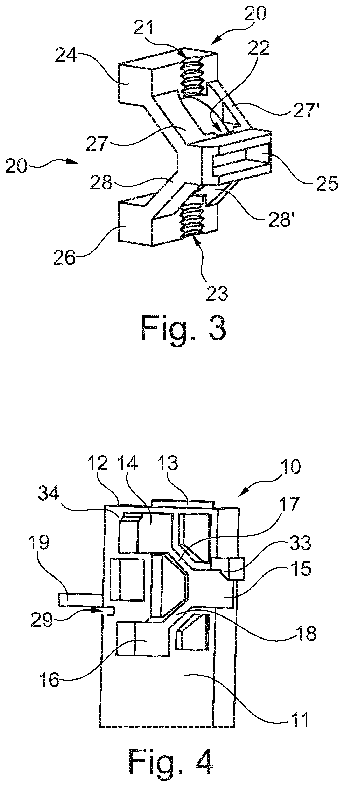

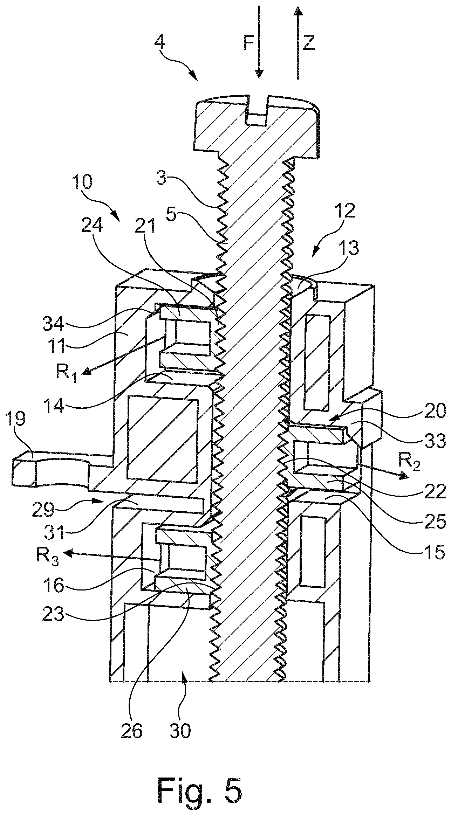

Alle üblichen, klassischen, insbesondere mechanischen Verbindungsmittel sind für die zwei Verbindungsmittel 6, 29 einsetzbar. Hier z. B. wird der dargestellte Schraubenkopf der Schraube 4 durch eine Aufnahme 9 des Rahmens 1 aufgenommen und durch ein erstes Verbindungsmittel 6 dort nach unten blockiert damit die Schraube 4 nur noch höhenverstellbar aber mit dem Rahmen 1 festverbunden ist. Das erste Verbindungsmittel 6 kann z. B. eine Halterung sein, die eine ringförmige Lasche aufweist durch welche die Schraube 4 hindurchragt und welche Halterung mit einem Rand des Rahmens 1 fest verbunden werden kann bevor der Rahmen 1 auf die Versorgungseinheit aufgesetzt wird. Der Klemmmutterträger 10 wird wiederum beispielsweise mit der Versorgungseinheit 2 durch eine sekundäre Schraubverbindung (mittels Lasche 19) und, wie angedeutet durch sein Eingreifen in die Nut 31 des Randes der Versorgungseinheit 2 festverbunden (s. Figur 4 oder 5). Diese Teile werden in der Praxis schon vormontiert bevor sie an der Baustelle installiert werden. Es fehlt dann zur eigentlichen gesuchten Verbindung nur mehr die Schrauben 4, z. B. Schrauben des Typs M6x60.

Erfindungsgemäß besteht die Schnellbefestigungsvorrichtung aus einem Klemmmutterträger 10 und einer Klemmmutter 20.

Wie auf Figur 3 zu erkennen, weist die Klemmmutter 20 drei separate Gewindesegmente 21, 22, 23 auf, die zusammen mit dem Gewinde 3 der zu befestigen Schraube 4 zusammenwirken.

Die drei separaten Gewindesegmente 21, 22, 23 sind an drei separaten Modulen 24, 25, 26 ausgebildet welche miteinander durch jeweils zwei elastisch ausgebildete Stegepaare 27, 27', 28, 28' verbunden sind.

Die Module 24, 25, 26 sind in der Höhe entlang des Schraubenschafts 5 versetzt angeordnet, wobei sich zwei direkt benachbarte Module 24, 25, 26 jeweils gegenüberstehen, so dass die Gewindesegmente 21, 22, 23 den Schraubenschaft 5 der Schraube 4 umringen.

Besonders bevorzugt wird die dargestellte Variante der Figur 3 in der sich die Module 24, 25, 26 jeweils diametral gegenüberstehen.

Die erfindungsgemäße Schnellbefestigungsvorrichtung ist ferner dadurch gekennzeichnet, dass die drei separaten Module 24, 25, 26 quaderförmig ausgebildet sind. Dies erhöht die Festigkeit und Stabilität und lässt genügend Platz für die Gewindesegmente 21, 22, 23 an den, der Schraube 4 zugewandten Seiten.

Die erfindungsgemäße Schnellbefestigungsvorrichtung ist auch dadurch gekennzeichnet, dass die drei separaten Module 24, 25, 26 parallel, links und rechts des Schraubenschafts 5 alternierend und höhenversetzt entlang der Längsachse der Schraube 4 angeordnet sind und dass die drei Gewindesegmente 21, 22, 23 in den Wänden, welche dem Gewinde 3 der Schraube 4 zugewandt sind, von den drei separaten Modulen 24, 25, 26 ausgebildet, insbesondere eingefräst sind.

Somit wir ein konventionelles Herein- bzw. Herausschrauben der Schraube 4 in die Schnellbefestigungsvorrichtung möglich.

Die erfindungsgemäße Schnellbefestigungsvorrichtung ist ferner dadurch gekennzeichnet, dass der Winkel zwischen mindestens einem Stegepaar 27, 27', 28, 28' und der Längsachse (parallel zum Schraubenschaft 5) der Schraube 4 ca. 45° beträgt. Die Stege 27, 27', 28, 28' sind in Regel als Balken geformt, die eine größere Länge als Durchschnitt besitzen. Der besagte Winkel ist somit der zwischen der Längsachse dieser Balken und der Längsachse der Schraube 4.

In noch bevorzugter Weise ist die erfindungsgemäße Schnellbefestigungsvorrichtung dadurch gekennzeichnet, dass alle Winkel zwischen den Stegepaaren 27, 27', 28, 28' und der Längsachse der Schraube 4 ca. 45° betragen. Diese Geometrie ist bevorzugt, da besonders stabil.

Die erfindungsgemäße Schnellbefestigungsvorrichtung ist auch dadurch gekennzeichnet, dass die Klemmmutter 20 eine horizontale und eine vertikale Symmetrieebene besitzt. Somit werden u. a. die Herstellungskosten dieses Teiles optimiert.

Ferner ist die besagte Schnellbefestigungsvorrichtung noch dadurch gekennzeichnet, dass die Klemmmutter 20 und der Klemmmutterträger 10 aus Kunststoff bestehen. Sie können durch die üblichen, dem Fachmann bekannten Techniken industriell und massenweise herstellt werden.

Da die Klemmmutter 20 eine gewisse Flexibilität aufweisen muss, werden insbesondere flexible, das heißt nicht allzu harte bzw. steife oder spröde Kunststoffe bevorzugt.

Wie auf den Figuren 1a, 1b zu erkennen ist, besteht der Klemmmutterträger 10 aus einem Gehäuse 11 oder Körper, der z. B. aus zwei zusammenfügbaren Hälften bestehen kann (Fig. 4 und 5). Diese vorgeformten Gehäuseteile können wie gewohnt mit den üblichen Mitteln ausgestatten werden, damit sie zusammen geklippt oder miteinander eingerastet werden können. Sie können auch zusammen verklebt oder verschweißt werden.

Das Gehäuse 11 weist an seiner oberen Stirnseite 12 eine Öffnung 13 auf, durch welche die Schraube 4 in den Klemmmutterträger 10 eingeführt und geleitet wird (Fig. 4). In den inneren Wänden des Gehäuses 11 bzw. sind drei Kammern 14, 15, 16 für die Module 24, 25, 26 bzw. jeweils zwei Rillenpaare 17, 18, 17', 18' für die Stegepaare 27, 27', 28, 28' der Klemmmutter 20 vorgesehen, wobei die besagten Kammern 14, 15, 16 und Rillenpaare 17, 18, 17', 18' jeweils in der inneren Wandung des Klemmmutterträgers 10 ausgebildet sind und wobei zwischen den drei Modulen 24, 25, 26 und den drei entsprechenden Kammern 14, 15, 16 sowie zwischen dem Gewinde 3 und den drei Gewindesegmente 21, 22, 23 genügend Spiel vorgesehen ist damit bei einem Hereindrücken ohne Drehen der Schraube 4 in die Vorrichtung die zwei Stegepaare 27, 27', 28, 28' sich aufeinander hinzu verbiegen um das Hereindrücken ohne eine Beschädigung der verschiedenen Gewindeabschnitte an der Schraube 4 und den Gewindesegmenten 21, 22, 23 zu ermöglichen.

Bei einer zweiteiligen Ausführung des Gehäuses 11 werden die Kammern 14, 15, 16 für die Module 24, 25, 26 jeweils durch die entsprechenden zwei Hälften gebildet während für die kleineren Stegepaare 27, 28 bzw. 27', 28' einer Seite des Gehäuses jeweils ein Rillenpaar 17, 18 bzw. 17', 18' in einer Seite ausreichen kann. Die verschiedenen Kammern und Rillen sind so ausgebildet, dass genügend große Auflageflächen für die Module 24, 25, 26 bzw. Stege 27, 28, 27', 28' entstehen, damit diese funktionstüchtig geführt und arbeiten (verformt) werden können.

Gemäß einer weiterer Ausführungsform ist am Gehäuse 11 oder Körper des Klemmmutterträgers 10 mindestens ein zweites Verbindungsmittel 29 vorgesehen ist, das die Schnellbefestigungsvorrichtung mit einem ersten Teil (hier die Versorgungseinheit 2) verbindet, wobei der zweite Teil (hier der Rahmen 1), der mit dem ersten Teil dank der Schnellbefestigungsvorrichtung zu verbinden ist, mit dem Kopf der Schraube 4, die in die Schnellbefestigungsvorrichtung eingedrückt wird fest verbunden ist. Dies wurde schon oben erwähnt.

Als zweite Verbindungsmittel 29 kommen alle gewöhnlichen Mittel in Frage wie z. B. eine vorstehende Lasche 19 mit einer Öffnung, die es ermöglicht die Schnellbefestigungsvorrichtung mit dem ersten Teil (Versorgungseinheit 2) entsprechend festzuschrauben (s. Fig. 2). Zusätzlich kann auch eine Nut 31 an der äußeren Wand des Gehäuses 11 vorgesehen werden. Diese ermöglicht es die fertige Schnellbefestigungsvorrichtung an einen entsprechenden Rand 32 der Versorgungseinheit 2 sicher in Position aufzustecken bevor diese beiden Teile an der Lasche 19 festverschraubt werden.

Die Schnellbefestigungsvorrichtung ist ebenfalls dadurch gekennzeichnet, dass das Gehäuse 11 des Klemmmutterträgers 10 im Bereich eines (oberen) Endes mindestens eine Klemmmutter 20 aufweist und am anderen (unteren) Ende durch eine untere Schürze 30 verlängert wird, welche in der Länge mindestens den maximalen vorstehenden Gewindeschaft 5 der Schraube 4 abdeckt. Dies ist z. B. auf den Figuren 2 und 5 gut sichtbar.

Alternativ kann der untere Teil des Gehäuses 11 des Klemmmutterträgers 10 auch gar keine Verlängerung über dem Teil das die Kammern 14, 15, 16 definiert aufweisen sondern nur mit einer unteren Seite abgeschlossen sein. Es kann auch an diesem unteren Ende des Gehäuses 11 eine eigene untere Seite vorgesehen werden, die eine zweite eigene separate untere Öffnung, ähnlich der Öffnung 13 an der oberen Stirnseite 12 aufweist. An dieser unteren Öffnung kann auch z. B. ein schützender hohler Zylinder angebracht werden der, das hervorstehende Gewinde 3 der durchgeführten Schraube 4 schützt. Bei einer zweiteiligen Ausgestaltung, wie oben erwähnt, wird dieser Zylinder dann durch zwei Zylinderhälften gebildet, die beim Zusammenbau des Klemmmutterträgers 10 nach Einsetzen der Klemmmutter 20 z. B. ineinander eingerastet und/oder miteinander verklebt werden.

Des Weiteren ist die Schnellbefestigungsvorrichtung der vorliegenden Erfindung, dadurch gekennzeichnet, dass das Gehäuse 11 oder der Körper des Klemmmutterträgers 10 aus zwei symmetrisch gebildeten Hälften gebildet ist, welche nach Einsetzen der Klemmmutter 20 fest zusammenmontiert werden. Dies vereinfacht die Produktion und verringert die Kosten. Beide symmetrische Hälften, die dann keine asymmetrischen (männlich-weibliche) Fixiermittel mehr aufweisen können werden dann zur Montage einfach miteinander verklebt oder vorsichtig zusammen geschweißt.

Gemäß einer weiteren Ausgestaltung, ist die erfindungsgemäße Schnellbefestigungsvorrichtung auch dadurch gekennzeichnet, dass der Klemmmutterträger 10 aus glasfaserverstärktem Kunststoff besteht. Dies erhöht dessen Festigkeit.

Das Funktionsprinzip wird insbesondere unter Bezugnahme auf die Figur 5 erklärt. Wird die Schraube 4 durch eine Kraft F nach unten bewegt (gedrückt), wird das erste obere Gewindesegment 21 der Klemmmutter 20 in Richtung R1 bewegt. Das zweite mittlere Gewindesegment 22 wird in Richtung R2 bewegt und das untere dritte Gewindesegment 23 in Richtung R3. Die Abschrägungen 33, 34 an den Wandungen des Gehäuses 11 im Bereich der entsprechenden oberen Kammer 14 und mittleren Kammer 15 können diese Verschiebung führen und erleichtern. Diese Bewegung geschieht ähnlich einer Feder, so dass die Klemmmutter 20 vertikal genügend komprimiert wird, wobei zumindest einige, insbesondere alle, der Gewindesegmente 21, 22, 23 der Module 24, 25, 26 nicht mehr oder zumindest weniger in das Gewinde 3 der Schraube 4 eingreifen. Somit kann die Schraube 4 bis zum gewünschten Anschlag regelrecht "durchgedrückt" werden. Wird dies besonders langsam und mit Gefühl durchgeführt federn die besagten Segmente immer wieder zurück wenn sie in den nächsten Gewindegang reinspringen. Die Schraube 4 kann somit vertikal auf die erforderliche Höhe verstellt werden ohne sie zu drehen. Wird die Schraube 4 auf Zug in Richtung Z belastet, legen sich das obere Gewindesegment 21, mittlere Gewindesegment 22 und untere Gewindesegment 23 jeweils an die oberen Wandungen des Gehäuses 11 der Kammern 14, 15, 16 fest. Die Gewindesegmente 21, 22, 23 greifen voll in das Gewinde 3 der Schraube 4 ein. Ein einfaches Herausziehen ist somit ohne Zerstörung unmöglich. Die Schraube 4 kann somit nur noch durch drehen z. B. gegen den Uhrzeigersinn entfernt werden.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Schnellbefestigungsvorrichtung des Typs Schraube-Mutter, insbesondere für die Befestigung von einem Rahmen (1) an einer Unterflur-Versorgungseinheit (2), wobei die Vorrichtung aus einem Klemmmutterträger (10) und einer Klemmmutter (20) besteht, wobei die Klemmmutter (20) drei separate Gewindesegmente (21, 22, 23) aufweist, die zusammen mit dem Gewinde (3) der zu befestigen Schraube (4) zusammenwirken, wobei die drei separaten Gewindesegmente (21, 22, 23) an drei separaten Modulen (24, 25, 26) ausgebildet sind welche miteinander durch jeweils zwei elastisch ausgebildete Stegepaare (27, 27', 28, 28') verbunden sind, wobei sich zwei direkt benachbarte Module (24, 25, 26) jeweils gegenüberstehen, so dass die Gewindesegmente (21, 22, 23) den Schraubenschaft (5) der Schraube (4) umringen **dadurch gekennzeichnet, dass** die drei separate Module (24, 25, 26) durch drei entsprechende Kammern (14, 15, 16), bzw. die zwei Stegepaare (27, 27', 28, 28') durch jeweils zwei Rillenpaare (17, 18, 17', 18') aufgenommen werden, wobei die besagten Kammern (14, 15, 16) und Rillenpaare (17, 18, 17', 18') jeweils in der inneren Wandung des Klemmmutterträgers (10) ausgebildet sind und wobei zwischen den drei Modulen (24, 25, 26) und den drei entsprechenden Kammern (14, 15, 16) sowie zwischen dem Gewinde (3) und den drei Gewindesegmente (21, 22, 23) genügend Spiel vorgesehen ist damit bei einem Hereindrücken ohne Drehen der Schraube (4) in die Vorrichtung die zwei Stegepaare (27, 27', 28, 28') sich aufeinander hinzu verbiegen um das Hereindrücken ohne eine Beschädigung der verschiedenen Gewindeabschnitte an der Schraube (4) und den Gewindesegmenten (21, 22, 23) zu ermöglichen.

2. Schnellbefestigungsvorrichtung nach Anspruch 1, **dadurch gekennzeichnet, dass** die drei separaten Module (24, 25, 26) quaderförmig ausgebildet sind.

3. Schnellbefestigungsvorrichtung nach Anspruch 2, **dadurch gekennzeichnet, dass** die drei separaten Module (24, 25, 26) parallel, links und rechts des Schraubenschafts (5) alternierend und höhenversetzt entlang der Längsachse der Schraube (4) angeordnet sind.

4. Schnellbefestigungsvorrichtung nach Anspruch 2 oder 3, **dadurch gekennzeichnet, dass** die drei Gewindesegmente (21, 22, 23) in den Wänden, welche dem Gewinde (3) der Schraube (4) zugewandt sind, von den drei separaten Modulen (24, 25, 26) ausgebildet, insbesondere eingefräst sind.

5. Schnellbefestigungsvorrichtung nach Anspruch 1 bis 4, **dadurch gekennzeichnet, dass** der Winkel zwischen mindestens einem Stegepaar (27, 27', 28, 28') und der Längsachse der Schraube (4) ca. 45° beträgt.

6. Schnellbefestigungsvorrichtung nach Anspruch 5, **dadurch gekennzeichnet, dass** alle Winkel zwischen den Stegepaaren (27, 27', 28, 28') und der Längsachse der Schraube (4) ca. 45° betragen.

7. Schnellbefestigungsvorrichtung nach Anspruch 6, **dadurch gekennzeichnet, dass** die Klemmmutter (20) eine horizontale und eine vertikale Symmetrieebene besitzt.

8. Schnellbefestigungsvorrichtung nach Anspruch 1 bis 7, **dadurch gekennzeichnet, dass** die Klemmmutter (20) und der Klemmmutterträger (10) aus Kunststoff bestehen.

9. Schnellbefestigungsvorrichtung nach Anspruch 8, **dadurch gekennzeichnet, dass** der Klemmmutterträger (10) aus glasfaserverstärktem Kunststoff besteht.

10. Schnellbefestigungsvorrichtung nach Anspruch 1 bis 9, **dadurch gekennzeichnet, dass** am Gehäuse (11) des Klemmmutterträgers (10) mindestens ein Verbindungsmittel (29) vorgesehen ist, das die Schnellbefestigungsvorrichtung mit einem ersten Teil verbindet, wobei der zweite Teil, der mit dem ersten Teil dank der Schnellbefestigungsvorrichtung zu verbinden ist mit dem Kopf der Schraube (4), die in die Schnellbefestigungsvorrichtung eingedrückt wird fest verbunden ist.

11. Schnellbefestigungsvorrichtung nach Anspruch 1 bis 10, **dadurch gekennzeichnet, dass** das Gehäuse (11) des Klemmmutterträgers (10) an einem Ende mindestens eine Klemmmutter (20) aufweist und durch eine Schürze (30) verlängert wird, welche in der Länge mindestens den maximalen vorstehenden Gewindeschaft (5) der Schraube (4) abdeckt.

12. Schnellbefestigungsvorrichtung nach Anspruch 1 bis 11, **dadurch gekennzeichnet, dass** der Körper des Klemmmutterträgers (10) aus zwei symmetrisch gebildeten Hälften gebildet ist, welche nach Einsetzen der Klemmmutter (20) fest zusammenmontiert werden.

## Claims

1. Quick-fastening device of the screw-nut type, in particular for fastening a frame (1) to an underfloor supply unit (2), wherein the device consists of a clamping nut carrier (10) and a clamping nut (20), wherein the clamping nut (20) has three separate threaded segments (21, 22, 23) which together interact with the thread (3) of the screw (4) to be fastened, wherein the three separate threaded segments (21, 22, 23) are formed on three separate modules (24, 25, 26) which are connected to one another by in each case two elastically formed web pairs (27, 27', 28, 28'), wherein two directly adjacent modules (24, 25, 26) are in each case opposite one another, with the result that the threaded segments (21, 22, 23) enclose the screw shank (5) of the screw (4), **characterized in that** the three separate modules (24, 25, 26) are received by three corresponding chambers (14, 15, 16), and the two web pairs (27, 27', 28, 28') are received by in each case two groove pairs (17, 18, 17', 18'), wherein said chambers (14, 15, 16) and groove pairs (17, 18, 17', 18') are in each case formed in the inner wall of the clamping nut carrier (10), and wherein sufficient play is provided between the three modules (24, 25, 26) and the three corresponding chambers (14, 15, 16) and between the thread (3) and the three threaded segments (21, 22, 23) such that, when the screw (4) is pressed into the device without turning, the two web pairs (27, 27', 28, 28') bend towards one another in order to allow the screw to be pressed in without damaging the various threaded portions on the screw (4) and the threaded segments (21, 22, 23).

2. Quick-fastening device according to Claim 1, **characterized in that** the three separate modules (24, 25, 26) are parallelepipedal.

3. Quick-fastening device according to Claim 2, **characterized in that** the three separate modules (24, 25, 26) are arranged in parallel, alternating on the left and right of the screw shank (5) and offset in height along the longitudinal axis of the screw (4).

4. Quick-fastening device according to Claim 2 or 3, **characterized in that** the three threaded segments (21, 22, 23) are formed, in particular milled, in the walls of the three separate modules (24, 25, 26) that face the thread (3) of the screw (4).

5. Quick-fastening device according to Claims 1 to 4, **characterized in that** the angle between at least one web pair (27, 27', 28, 28') and the longitudinal axis of the screw (4) is about 45º.

6. Quick-fastening device according to Claim 5, **characterized in that** all the angles between the web pairs (27, 27', 28, 28') and the longitudinal axis of the screw (4) are about 45º.

7. Quick-fastening device according to Claim 6, **characterized in that** the clamping nut (20) has a horizontal and a vertical plane of symmetry.

8. Quick-fastening device according to Claims 1 to 7, **characterized in that** the clamping nut (20) and the clamping nut carrier (10) consist of plastic.

9. Quick-fastening device according to Claim 8, **characterized in that** the clamping nut carrier (10) consists of glass-fibre-reinforced plastic.

10. Quick-fastening device according to Claims 1 to 9, **characterized in that** at least one connecting means (29) is provided on the housing (11) of the clamping nut carrier (10), which connecting means connects the quick-fastening device to a first part, wherein the second part, which is to be connected to the first part by virtue of the quick-fastening device, is firmly connected to the head of the screw (4) which is pressed into the quick-fastening device.

11. Quick-fastening device according to Claims 1 to 10, **characterized in that** the housing (11) of the clamping nut carrier (10) has at least one clamping nut (20) at one end and is extended by a skirt (30) which in terms of length covers at least the maximum projecting threaded shank (5) of the screw (4).

12. Quick-fastening device according to Claims 1 to 11, **characterized in that** the body of the clamping nut carrier (10) is formed from two symmetrically formed halves which are firmly mounted together after inserting the clamping nut (20).

## Revendications

1. Dispositif de fixation rapide du type vis-écrou, en particulier pour la fixation d'un cadre (1) sur une unité d'alimentation enterrée (2), lequel dispositif est constitué d'un support d'écrou de serrage (10) et d'un écrou de serrage (20), l'écrou de serrage (20) présentant trois segments filetés séparés (21, 22, 23) qui coopèrent avec le filetage (3) de la vis (4) à fixer, les trois segments filetés séparés (21, 22, 23) étant formés sur trois modules séparés (24, 25, 26) qui sont reliés entre eux par deux paires de branches réalisées élastiques (27, 27', 28, 28'), deux modules directement adjacents (24, 25, 26) se faisant chaque fois face, de sorte que les segments filetés (21, 22, 23) entourent la tige de vis (5) de la vis (4), **caractérisé en ce que** les trois modules séparés (24, 25, 26) sont reçus par trois chambres correspondantes (14, 15, 16), respectivement les deux paires de branches (27, 27', 28, 28') sont reçues par chaque fois deux paires de rainures (17, 18, 17', 18'), lesdites chambres (14, 15, 16) et paires de rainures (17, 18, 17', 18') étant chaque fois formées dans la paroi intérieure du support d'écrou de serrage (10) et un jeu suffisant étant prévu entre les trois modules (24, 25, 26) et les trois chambres correspondantes (14, 15, 16) ainsi qu'entre le filetage (3) et les trois segments filetés (21, 22, 23) pour que les deux paires de branches (27, 27', 28, 28') puissent se plier l'une vers l'autre lorsque la vis (4) est enfoncée sans tourner dans le dispositif afin de permettre un enfoncement sans endommager les différentes parties filetées sur la vis (4) et les segments filetés (21, 22, 23).

2. Dispositif de fixation rapide selon la revendication 1, **caractérisé en ce que** les trois modules séparés (24, 25, 26) sont réalisés en forme de parallélépipède.

3. Dispositif de fixation rapide selon la revendication 2, **caractérisé en ce que** les trois modules séparés (24, 25, 26) sont disposés parallèlement, de façon alternée à gauche et à droite de la tige de vis (5) et décalée en hauteur le long de l'axe longitudinal de la vis (4).

4. Dispositif de fixation rapide selon la revendication 2 ou 3, **caractérisé en ce que** les trois segments filetés (21, 22, 23) sont formés par les trois modules séparés (24, 25, 26), en particulier fraisés, dans les parois tournées vers le filetage (3) de la vis (4).

5. Dispositif de fixation rapide selon les revendications 1 à 4, **caractérisé en ce que** l'angle entre au moins une paire de branches (27, 27', 28, 28') et l'axe longitudinal de la vis (4) est approximativement de 45°.

6. Dispositif de fixation rapide selon la revendication 5, **caractérisé en ce que** tous les angles entre les paires de branches (27, 27', 28, 28') et l'axe longitudinal de la vis (4) sont approximativement de 45°.

7. Dispositif de fixation rapide selon la revendication 6, **caractérisé en ce que** l'écrou de serrage (20) présente un plan de symétrie horizontal et un plan de symétrie vertical.

8. Dispositif de fixation rapide selon les revendications 1 à 7, **caractérisé en ce que** l'écrou de serrage (20) et le support d'écrou de serrage (10) sont en matière plastique.

9. Dispositif de fixation rapide selon la revendication 8, **caractérisé en ce que** le support d'écrou de serrage (10) est en matière plastique renforcée de fibres de verre.

10. Dispositif de fixation rapide selon les revendications 1 à 9, **caractérisé en ce qu'**au moins un moyen de liaison (29) est prévu sur le boîtier (11) du support d'écrou de serrage (10), lequel relie le dispositif de fixation rapide à une première partie, la deuxième partie, qui est à relier à la première partie au moyen du dispositif de fixation rapide, étant solidaire de la tête de la vis (4) qui est enfoncée dans le dispositif de fixation rapide.

11. Dispositif de fixation rapide selon les revendications 1 à 10, **caractérisé en ce que** le boîtier (11) du support d'écrou de serrage (10) présente à une extrémité au moins un écrou de serrage (20) et est prolongé par une jupe (30) qui recouvre au moins la longueur de la tige filetée (5) en saillie maximale de la vis (4).

12. Dispositif de fixation rapide selon les revendications 1 à 11, **caractérisé en ce que** le corps du support d'écrou de serrage (10) est formé de deux moitiés symétriques qui sont assemblées solidement après insertion de l'écrou de serrage (20).
